# EUROPEAN PATENT APPLICATION

(11) **EP 4 795 991 A1**
(43) Date of publication of application: **26.08.2026**
(21) Application number: 26159404.8
(22) Date of filing: 18.02.2026
(51) Int. Cl.: A47J 37/07

(54) **SMOKER-GRILL COOKING APPARATUS WITH GRILL RACK ATTACHMENT**

(30) Priority: 21.02.2025 US 202519059406
(71) Applicant: Mr. Bar-B-Q Products LLC, Hauppauge, NY 11788 (US)
(72) Inventor: ZEMEL, Marc, Hauppauge, NY 11788 (US); RUDIS, Joanne, Hauppauge, NY 11788 (US)
(74) Representative: M. Zardi & Co S.A.

(57) **Abstract**

A smoker-grill cooking apparatus (1000), including a base (300) including a top edge (310) and a bottom edge (320); a cooking area (330) in an interior of the base (300); a lid (200) including a top edge (250), a bottom edge (275), and a fuel chamber (230), wherein the fuel chamber (230) houses a fuel source; a receptacle (400) including a contact portion and an outside portion, wherein the contact portion is configured to attach to the bottom edge (320) of the base (300) and house a fuel source; a grill rack (500); and at least one fixture (700) configured to support the grill rack on the base.

## Description

### TECHNICAL FIELD

The present apparatus relates generally to the field of outdoor smoker and/or grills, and more particularly, to multi-functioning outdoor smokers that can be used as a grill, where the grill component is removable.

### BACKGROUND

Meat smokers have been around for centuries and are designed to cook food, most commonly meat. With a smoker, food cooks at lower temperatures through indirect heat. By using indirect heat, smokers often require a longer duration to cook foods. In general, smokers are most commonly designed to be fueled by wood, however, they may also be fueled by charcoal, gas, or electric. Smokers use the captured smoke from a burning wood-chip basin to cook the food. Inside the smoker, the air temperature may be controlled to remain at a desired temperature until the food is cooked to a desired likeness.

Grills, however, operate at higher temperatures, through direct heat. When cooking food on a grill, the food is cooked directly over a heat source, the heat source usually being flames generated from heated wood, gas or charcoal. Thus, the direct heat from the grill, makes it a less time consuming method of cooking food.

Due to the difference in duration of cooking and resulting flavors of food, smokers and grills are often purchased and used separately. Commonly, most convertible smokers are not configured to both smoke and grill at the same time. The presently disclosed smoker-grill cooking apparatus provides a single apparatus that allows for both smoking and grilling of foods to occur at the same time, with the same apparatus, and from the same fuel source. Further, the presently disclosed apparatus provides for a removeable grill rack attachment that can be installed and removed upon desired use.

### SUMMARY

Existing challenges associated with the foregoing, as well as other challenges, are overcome by the presently disclosed multi-functional smoker-grill cooking apparatus by providing users with a singular apparatus that has the capability to both smoke and grill foods at the same time, by providing a smoker unit that is compatible with a grill rack attachment that can be attached and removed upon desired use.

An aspect of the present disclosure provides a smoker-grill cooking apparatus. The apparatus includes a base, a cooking area, a lid, a receptacle, a grill rack, and at least one fixture. The base includes a top edge and a bottom edge. The cooking area, located in the interior of the base, includes a cooking plate. The lid, includes a top edge, a bottom edge, and a fuel chamber. The fuel chamber houses a heat source. The receptacle has a contact portion and an outside portion, the contact portion attaches to the bottom edge of the base and houses a fuel source. The at least one fixture supports the grill rack.

In an aspect of the present disclosure, the bottom edge of the lid may attach to the top edge of the base defining an open position and a closed position.

In another aspect of the present disclosure, the outside portion of the receptical may be coupled to a plurality of legs arranged in a tripod configuration angling outwardly relative to one another.

In yet another aspect of the present disclosure, the at least one fixture may be coupled to the base by at least one support pin.

In a further aspect of the present disclosure, the grill rack may be fitted to the base.

In an aspect of the present disclosure, the grill rack may be of circular shape with an inner radius and outer radius, and the outer radius may extend past an outer radius of the receptacle.

In an aspect of the present disclosure, the grill rack may be configured to rest on at least one fixture, directly above the receptacle.

In an aspect of the present disclosure, the grill rack may be removeable.

In an aspect of the present disclosure, the at least one fixture may be removeable.

An aspect of the present disclosure provides a smoker-grill cooking apparatus. The apparatus includes a smoker unit and a grill attachment. The smoker unit includes a base, with a top edge and a bottom edge, the bottom edge of the base configured to attach to a receptacle, and a lid including a top edge and a bottom edge, the bottom edge of the lid configured to attach to the top edge of the base defining an open position and a closed position. The grill rack attachment includes a grill rack configured directly above the receptacle and at least one fixture configured to support the grill rack on the base.

In an aspect of the present disclosure, the grill rack may be fitted to the base.

In an aspect of the present disclosure, the grill rack may be circular in shape with inner radius and outer radius, and the outer radius may extend past an outer radius of the receptacle.

In another aspect of the present disclosure, the grill rack may be removeable.

In further aspects of the present disclosure, the receptacle may be configured to house a fuel source, and the receptacle may include an ignitor port.

In an aspect of the present disclosure, the fuel source may be positioned directly below the grill rack to provide a direct heat source to food on the grill rack.

In another aspect of the present disclosure, the base may include a plurality of recess pairs along the surface of the base.

In further aspects of the present disclosure, the at least one fixture may have a first recess and a second recess.

In an aspect of the present disclosure, the at least one fixture may be coupled to the base by aligning the first recess and the second recess of a fixture to a pair of the plurality of recess pairs along the base and inserting a support pin of a plurality of support pins in the aligned recess.

In an aspect of the present disclosure, the at least one fixture may be removable.

In an aspect of the present disclosure, the smoker-grill cooking apparatus may include a fuel chamber on a top surface of the lid configured to house a fuel source, wherein the fuel chamber includes at least one ignitor port.

In another aspect of the present disclosure, the smoker unit may include a plurality of legs arranged in a tripod configuration angling outwardly relative to one another and from the center of the base; and a pair of handles on the top surface of the lid, proximal to the chimney, configured to place the lid in the open positon and the closed position.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The foregoing and other features of this disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings, in which:
FIG. 1 illustrates a front elevation view of an exemplary embodiment of a smoker-grill cooking apparatus, in accordance with embodiments of the present disclosure;
FIG. 2 illustrates a top inside view of an exemplary embodiment of the smoker-grill cooking apparatus, in accordance with embodiments of the present disclosure;
FIG. 3a illustrates a bottom plan view of a receptacle of the smoker-grill cooking apparatus of FIG. 1, in accordance with the present disclosure;
FIG. 3b illustrates a front perspective view of a leg of the smoker-grill cooking apparatus of FIG. 1, in accordance with the present disclosure;
FIG. 4 illustrates a top perspective view of an exemplary embodiment of a removeable grill rack attachment of the smoker-grill cooking apparatus of FIG. 1, in accordance with the present disclosure;
FIG. 5 illustrates an exemplary embodiment of the fixtures of the removeable grill rack attachment of FIG. 4, in accordance with the present disclosure; and
FIGS. 6 and 7 illustrate perspective views of exemplary embodiments of assembling the grill rack of FIG. 5 onto the smoker-grill cooking apparatus, in accordance with the present disclosure;
FIG. 8 illustrates a front elevation view of another exemplary embodiment of the removeable grill rack attachment of the smoker-grill cooking apparatus of FIG. 1, in accordance with the present disclosure.
FIGS. 9a and 9b illustrate an exemplary embodiment of a top grill rack of the smoker-grill cooking apparatus of FIG.1, in accordance with the present disclosure.

Some embodiments of the disclosure are herein described, by way of example only, with reference to the accompanying drawings. With specific reference to the drawings in detail, it is stressed that the particulars shown are by way of example and for purposes of illustrative discussion of the embodiments of the present disclosure only, and are presented in the cause of providing what is believed to be the most useful and readily understood description of the principles and conceptual aspects of the disclosure. The description taken with the drawings makes apparent to those skilled in the art how the various forms of the disclosure may be embodied in practice.

### DETAILED DESCRIPTION

The present disclosure relates generally to the field of outdoor smokers and grills, and more specifically, to a smoker with a removeable grill member attachment.

Aspects of the present disclosure are described in detail with reference to the drawings wherein like reference numerals identify similar or identical elements.

Although the present disclosure will be described in terms of specific aspects and examples, it will be readily apparent to those skilled in this art that various modifications, rearrangements, and substitutions may be made without departing from the spirit of the present disclosure.

For purposes of promoting an understanding of the principles of the present disclosure, reference will now be made to exemplary aspects illustrated in the drawings, and specific language will be used to describe the same. It will nevertheless be understood that no limitation of the scope of the present disclosure is thereby intended. Any alterations and further modifications of the novel features illustrated herein, and any additional applications of the principles of the present disclosure as illustrated herein, which would occur to one skilled in the relevant art and having possession of this disclosure, are to be considered within the scope of the present disclosure.

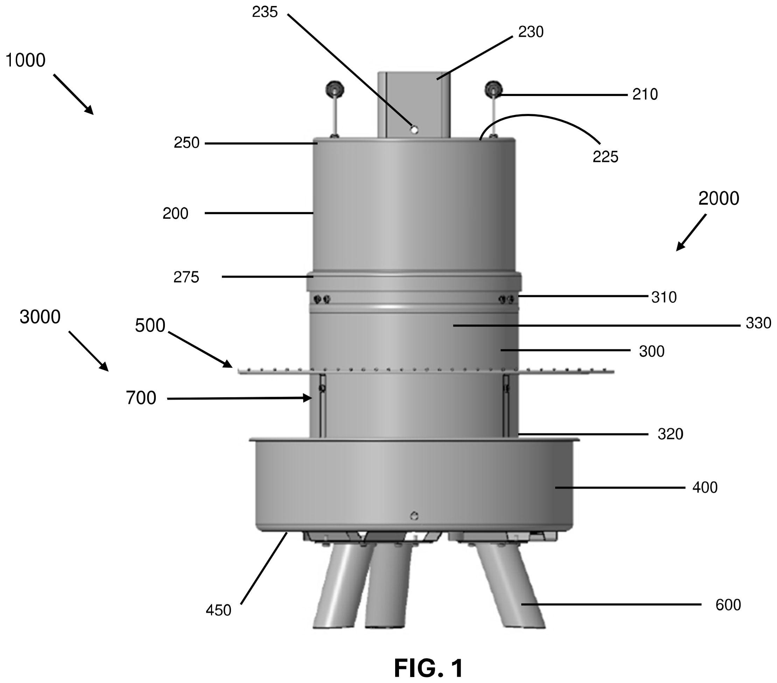

Referring to FIG. 1, a smoker-grill cooking apparatus 1000 with a grill rack 500 is shown. Typically, the smoker-grill cooking apparatus 1000 comprises a smoker 2000 configured to smoke food and a grill rack attachment 3000 configured to grill food. The smoker 2000 is comprised of base 300, lid 200 configured to cover base 300, and a receptacle 400 configured to house a fuel source.

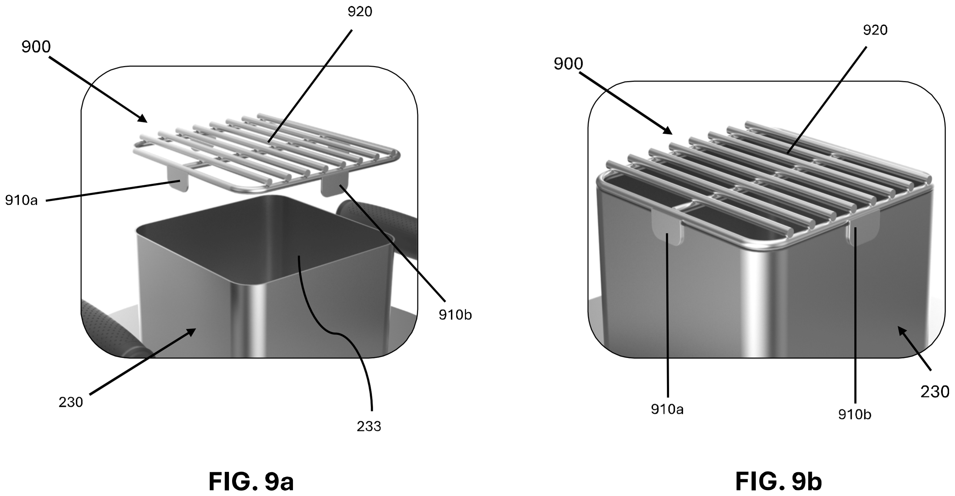

The lid 200 generally includes a top edge 250 and a bottom edge 275. The base 300, has a top edge 310 and a bottom edge 320. As shown, the lid 200 and base 300 have a cylindrical shape, although lid 200 and base 300 may comprise any suitable shape. Lid 200 has a top surface 225 and includes a pair of handles 210 and a fuel chamber 230. The pair of handles 210 are proximal to fuel chamber 230 and are configured to enable a user to lift and lower lid 200, placing the lid 200 in an open and closed position. The closed position being defined by the top edge 310 of base 300 receiving the bottom edge 275 of lid 200. Fuel chamber 230 is configured to house a fuel source (e.g. wood-chips, charcoal, etc) and provide indirect convection heat to base 300. Fuel chamber includes an opening 233, that is configured to receive the fuel source (FIG. 9a). Fuel chamber 230 is illustrated as square in shape, however any suitable shape is contemplated. Fuel chamber 230 includes at least one igniter port 235. Igniter port 235 is an opening configured to allow a lighter, match, or any other suitable fire-starting tool to ignite the fuel source in fuel chamber 230.

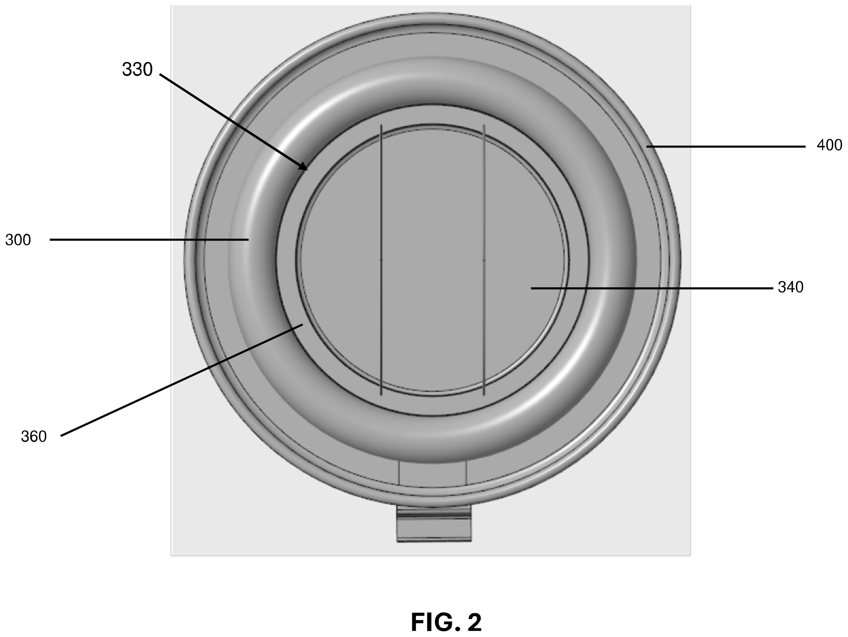

Referring to FIGs. 1 and 2, the base 300 generally houses a cooking area 330 and drip pan 340 (FIG. 2). In various embodiments of the present disclosure, the cooking area 330 may include cooking attachments, for example, cooking grate(s) configured to support food, rib hanger(s), chicken wing hanger(s), and a poultry post with a lifting handle. The cooking grates may be circular in shape or any other suitable shape, such that the radius of a cooking grate is fitted to the base 300. For example, the radius of cooking grate may be the same or slightly smaller than the diameter of base 300. Rib hangers may be mechanically coupled to the inside surface of the top edge 310 of base 300, upon desired use. Referring to FIG. 2, drip pan 340 may be inserted into base 300 and disposed on the inside surface of bottom edge 320 below the cooking area 330. Drip pan 340 may be circular in shape or any other suitable shape, such that the radius of drip pan 340 is smaller than the radius of base 300, creating an annular ring 360. Drip pan 340 is configured to collect moisture, juices, grease, and drippings expelled from the food cooking in cooking area 330. Drip pan 340 may be made of stainless steel or any other suitable material (e.g. alumnium). In other embodiments, drip pan 340 may be a disposable aluminum foil pan or tray, allowing for a disposable, single use, and easy clean up drip pan. In another embodiment, drip pan 340 may house wood chips as a source of heat to be provided to cooking area 330. In other embodiments, annular ring 360 may include removeable wood chip trays, configured to house wood chips as a source of heat to be provided to cooking area 330.

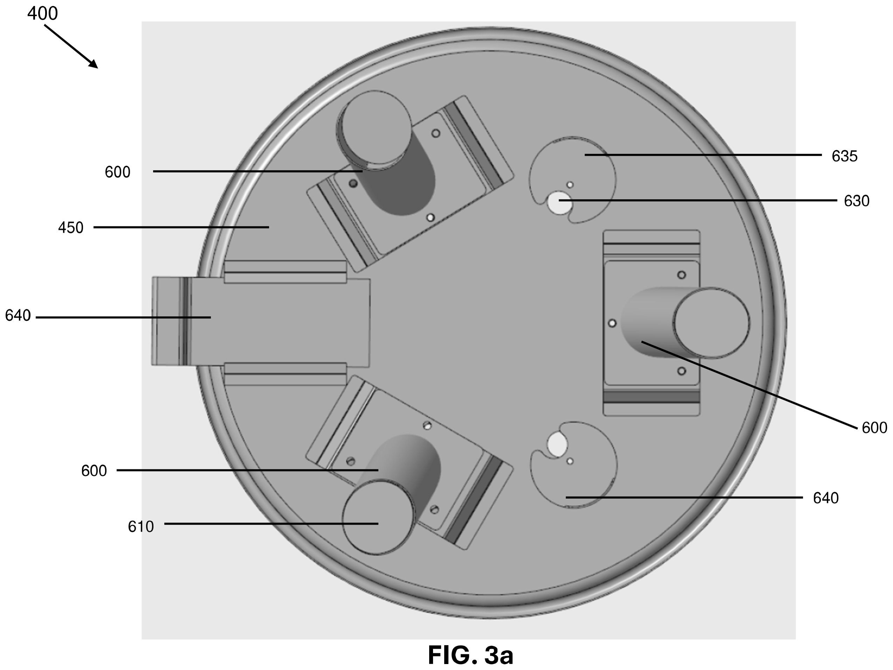

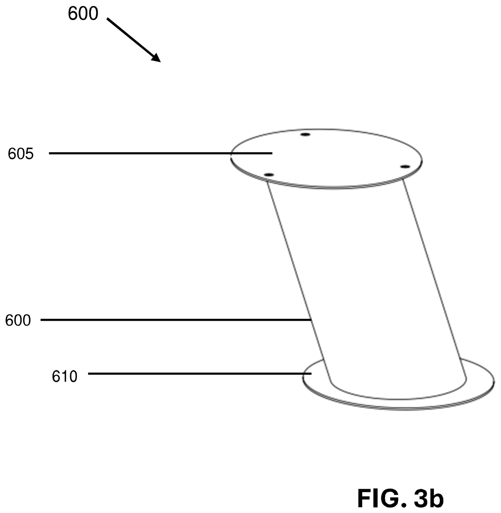

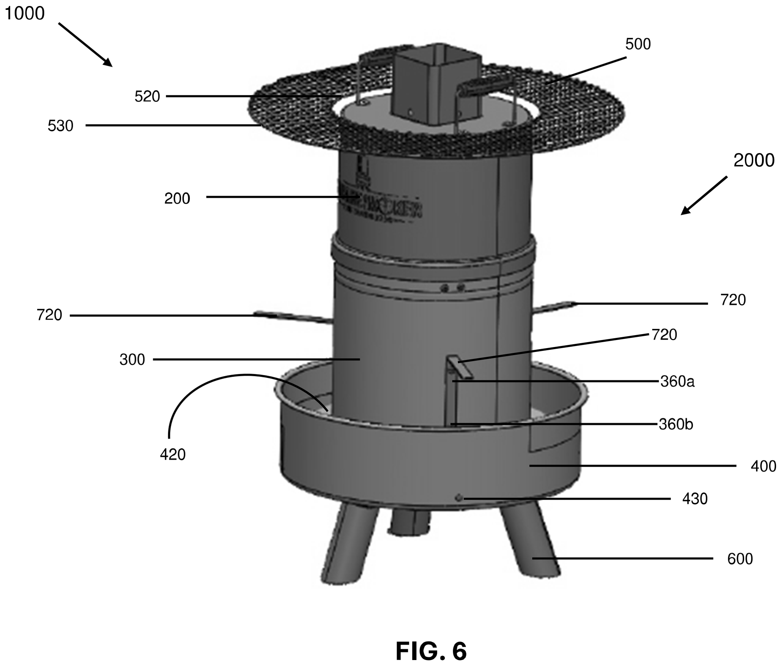

Receptacle 400 has a contact surface 420 (FIG. 6) and an outside surface 450 (FIG. 3). The contact surface 420 is fixed, by any suitable means, to the bottom edge 320 of base 300. Receptacle 400 is configured to have a diameter larger than the diameter of base 300. Receptical 400 may be in the shape of a circle, oval, square, heptagon, octagon, or any other suitable shape. The receptacle 400 is configured to house a fuel source on the contact surface 420. The fuel may be provided by charcoal or any other suitable material. Receptacle 400 includes at least one igniter port 430 (FIG. 6). Igniter port 430 is an opening configured to allow a lighter, match, or any other suitable fire-starting tool to ignite the fuel source placed on contact surface 420.

Outside surface 450 includes a plurality of legs 600, at least one probe hole 630, and an ash door 640. The outside surface 450 is coupled to a plurality of legs 600, for example, two, three, or four legs (FIG. 3a). Plurality of legs 600 may be arranged in a tripod configuration angling outwardly relative to one another, or any suitable configuration for supporting the smoker-grill cooking apparatus. The plurality of legs 600 includes a top base 605 and a bottom base 610 (FIG. 3b) . The top base 605 is mechanically coupled to outside surface 450. The bottom base 610 of the plurality of legs 600 enable the smoker-grill cooking apparatus 1000 to remain upright and not tip when placed vertically on the ground and may be any suitable shape, such as but not limited to circular, square, rectangular, etc. The top base 605 and bottom base 610 may have a larger diameter than the diameter of the plurality of legs 600 (FIG. 3b). The top base 605 may be any suitable shape, such as but not limited to circular, square, rectangular, etc. At least one probe hole 630 provides an opening to cooking area 330. Cover 635 is mechanicaly coupled to outside surface 450 and is configured to pivot around probe hole 630 designating an open and a closed position. In an open position, cover 635 is moved so that probe hole 630 is exposed and a thermometer or other temperature measurement device can be inserted to determine the tempterature inside cooking area 330. Cover 635 can be moved to a closed position, so that probe hole 630 is completely covered and the heat within cooking area 330 is not expelled. Ash door 640, is configured to slide to an open position and release the ashes and charcoal from the burning fuel source on contact surface 420 after use.

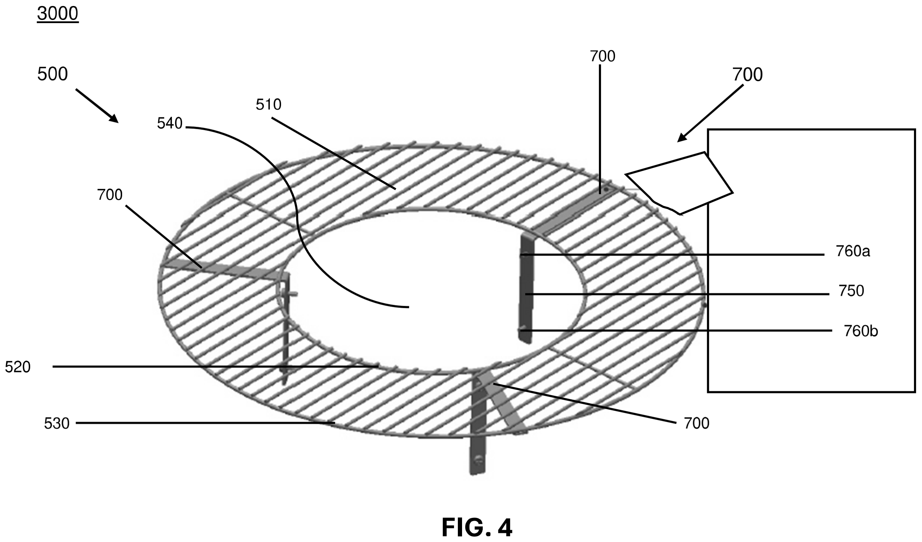

Referring to FIG. 4, grill rack 500 is configured to have an inner radius 520 and an outer radius 530, forming a hollow center 540. Grill rack 500 may be circular in shape or any other suitable shape. Referring to FIG. 6, the inner radius 520 of grill rack 500 is fitted to the smoker 2000. For example, diameter of inner radius 520 of grill rack 500 may be the same as or slightly larger than a diameter of smoker 2000. Outer radius 530 of grill rack 500 may be the same or slightly larger than the radius of the receptacle 400. Grill rack 500, includes surface 510 which may be a grill grate, a flat griddle surface, and/or a flat grill plate without grating. The surface 510 may be made of any one of stainless steel, porcelain-coated steel or cast iron, cast iron, chrome-plated steel, or any other suitable material. The surface 510 of grill rack 500 may support food, such as, meat, vegetables, or any other suitable substances for cooking.

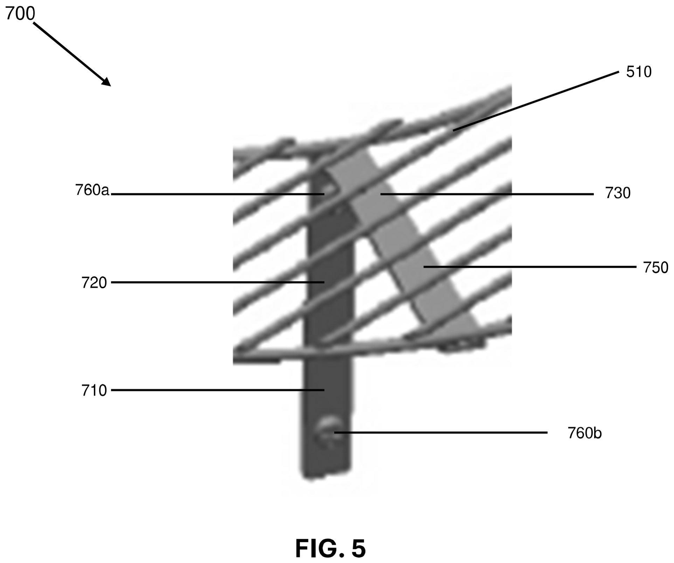

Referring to FIGS. 4-6, the grill rack attachment 3000 generally includes a grill rack 500, at least one fixture 700, and the base 300 of the smoker 2000. The base 300 is configured to mechanically couple to at least one fixture 700. Referring to FIG. 5, the at least one fixture 700 has a first leg 720 and second leg 730, that meet to create a right angle formation. First leg 720 includes a first recess 760a and a second recess 760b. The at least one fixture 700 has a front side 710 and a contact portion 750. The at least one fixture 700 is secured to the base 300 by aligning first recess 760a and second recess 760b on the contact portion 750 of first leg 720 with one of a plurality of recess pairs 360a and 360b on base 300. Once first recess 760a is aligned with recess 360a of base 300 and second recess 760b is aligned with recess 360b of base 300, a plurality of support pins (e.g. screws, or any other suitable material) are inserted and secured (FIG 6). Once the at least one fixture 700 is secured to base 300, second leg 730 of at least one fixture 700 extends laterally from the base 300. The hollow center 540 of grill rack 500 is aligned with the diameter of smoker 2000 and is moved vertically towards the at least one fixture 700. Grill rack 500 is configured to rest on contact portion 750 of second leg 730 of the at least one fixture 700. In aspects, the at least one fixture 700 may be "L" shaped corner brackets or any suitable fixtures for allowing grill rack 500 to sit on a predetermined position on the receptacle. In another aspect, the at least one fixture 700 may be a single "L" shaped platform that fits around the total circumference of the base 300.

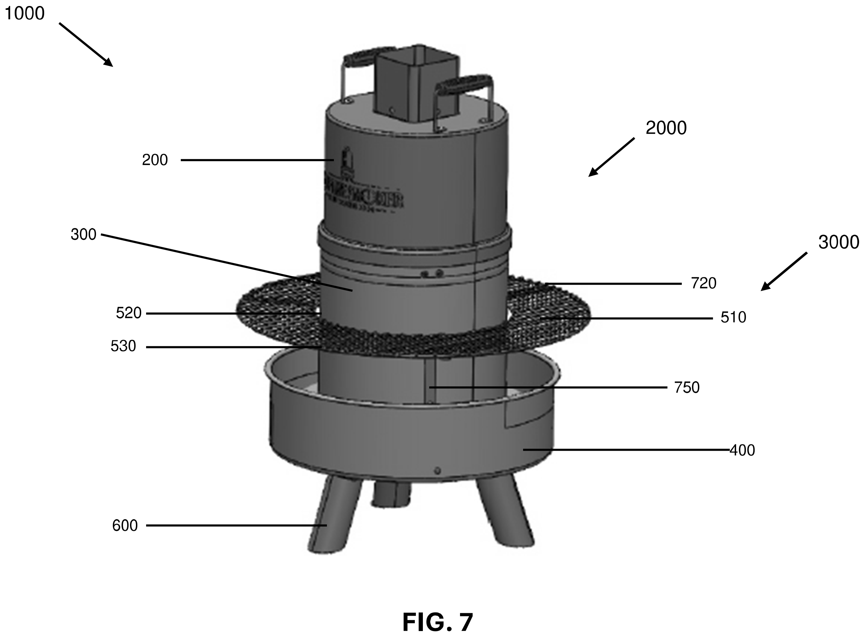

FIG. 7 illustrates grill rack 500 resting on the contact portion 750 of the at least one fixture 700, where the at least one fixture 700 is mechanically coupled to base 300. Grill rack 500 is configured to rest directly above the receptacle 400. In the foregoing example, the grill rack 500 and the at least one fixture 700 can be removed. Accordingly, the at least one fixture 700 can be removed from base 300 by loosening and removing the screws at first recess 760a and second recess 760b. The at least one fixture 700 may be mechanically coupled to the base 300 for future use.

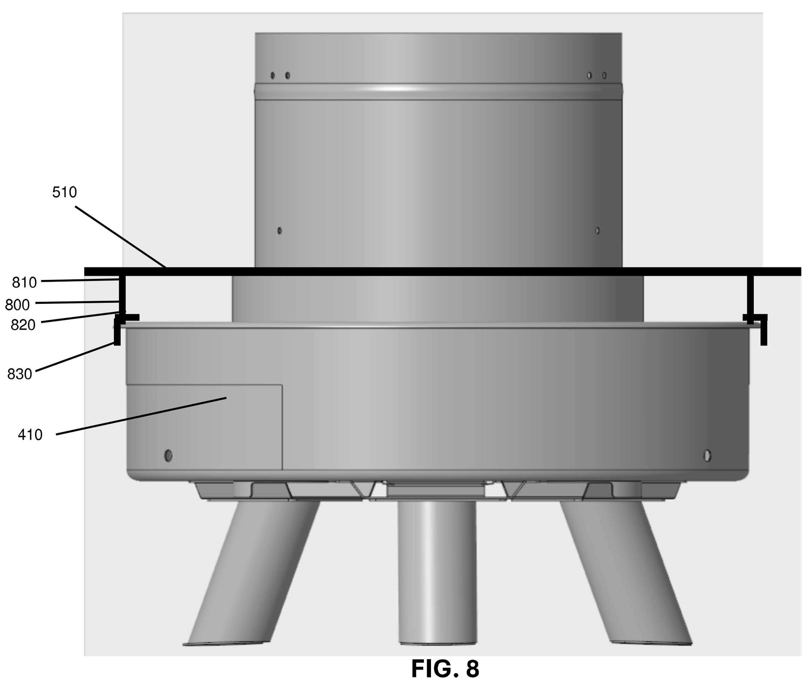

In various embodiments, the grill rack attachment 3000 may be configured to receptacle 400. Specifically, referring to FIG. 8, grill rack 500 may include at least one attachment post 800, where the at least one attachment post 800 has a first end 810 and a second end 820. The first end 810 of the at least one attachment post 800 is coupled to outer radius 530 of grill rack 500. The second end 820 of the at least one attachment post 800 is attached to connector 830. Connector 830 is configured to mechanically couple to receptacle 400, so that grill rack 500 rests directly above receptacle 400. Connector 830 may be a single "U" shaped bracket that fits the width of the rim of receptable 400. In another aspect, connector 830 may also be a spring clamp, C-clamp, or any other suitable device/mechanism that supports grill rack 500. In the foregoing example, the grill rack 500 and connector 830 can be removable from receptacle 400.

In various embodiments, the fuel chamber 230 may be configured to support a top grill rack 900. Referring to FIGS. 9a and 9b, the top grill rack 900 may include at least two attachment posts 910a and 910b and a surface 920. The at least two attachment post 910a and 910b are configured to rest on fuel chamber 230, directly over opening 233 (FIG. 9b). Grill rack attachment 3000 may also be configured to receptacle 400 in the same manner. Surface 920 may be a grill grate, a flat griddle surface, and/or a flat grill plate without grating. The surface 920 may be made of any one of stainless steel, porcelain-coated steel or cast iron, cast iron, chrome-plated steel, or any other suitable material. The surface 920 of top grill rack 900 may support food, such as, meat, vegetables, or any other suitable substances for cooking. In the foregoing example, the top grill rack 900 can be removable. Accordingly, the top grill rack 900 can be removed from fuel chamber 130 by lifting it away from opening 233. The top grill rack 900 may be attached to the fuel chamber 230 for future use.

In an aspect of the the present disclosure, the fuel source (e.g. wood-chips, charcoal, etc) is added to the receptacle 400 and fuel chamber 230 and ignited through igniter port(s) 430 and 235, respectively. Upon ignition, the fuel source(s) provide indirect heat to cooking area 330 of base 300, generating steam within the cooking area. In generating steam within the cooking area, the food cooks at a much more rapid rate while utilizing indirect heat. Furthermore, grill rack attachment 3000 and top grill rack 900 may be attached at the same time, whereby the fuel source provides a direct heat source to the grill rack 500 and top grill rack 900 and any food materials being supported on surface 510 and surface 920. In alternative embodiments, a propane source may be configured to attach to the smoker-grill apparatus to provide a fuel source to the smoker-grill apparatus.

Certain aspects of the present disclosure may include some, all, or none of the above advantages and/or one or more other advantages readily apparent to those skilled in the art from the drawings, descriptions, and claims included herein. Moreover, while specific advantages have been enumerated above, the various aspects of the present disclosure may include all, some, or none of the enumerated advantages and/or other advantages not specifically enumerated above.

The aspects disclosed herein are examples of the disclosure and may be embodied in various forms. For instance, although certain aspects herein are described as separate aspects, each of the aspects herein may be combined with one or more of the other aspects herein. Specific structural and functional details disclosed herein are not to be interpreted as limiting, but as a basis for the claims and as a representative basis for teaching one skilled in the art to variously employ the present disclosure in virtually any appropriately detailed structure. Like reference numerals may refer to similar or identical elements throughout the description of the figures.

The phrases "in an aspect," "in aspects," "in various aspects," "in some aspects," or "in other aspects" may each refer to one or more of the same or different example Aspects provided in the present disclosure. A phrase in the form "A or B" means "(A), (B), or (A and B)." A phrase in the form "at least one of A, B, or C" means "(A); (B); (C); (A and B); (A and C); (B and C); or (A, B, and C)."

It should be understood that the foregoing description is only illustrative of the present disclosure. Various alternatives and modifications can be devised by those skilled in the art without departing from the disclosure. Accordingly, the present disclosure is intended to embrace all such alternatives, modifications, and variances. The aspects described with reference to the attached drawing figures are presented only to demonstrate certain examples of the disclosure. Other elements, steps, methods, and techniques that are insubstantially different from those described above and/or in the appended claims are also intended to be within the scope of the disclosure.

## Claims

1. A smoker-grill cooking apparatus (1000), comprising:
a base (300) including a top edge (310) and a bottom edge (320);
a cooking area (330) in an interior of the base (300);
a lid (200) including a top edge (250), a bottom edge (275), and a fuel chamber (230), wherein the fuel chamber (230) houses a fuel source;
a receptacle (400) including a contact portion and an outside portion, wherein the contact portion is configured to attach to the bottom edge (320) of the base (300) and house a fuel source;
a grill rack (500); and
at least one fixture (700) configured to support the grill rack (500) on the base (300).

2. The smoker-grill cooking apparatus (1000) of claim 1, wherein the the bottom edge (275) of the lid (200) is configured to attach to the top edge (310) of the base (300) defining an open position and a closed position.

3. The smoker-grill cooking apparatus (1000) of claim 1, wherein the outside portion of the receptacle (400) is coupled to a plurality of legs (600) arranged in a tripod configuration angling outwardly relative to one another.

4. The smoker-grill cooking apparatus (1000) of claim 1, wherein the outside portion of the receptacle (400) includes at least one probe hole (630).

5. The smoker-grill cooking apparatus (1000) of claim 1, wherein the grill rack (500) is fitted to the base (300).

6. The smoker-grill cooking apparatus (1000) of claim 5, wherein the grill rack (500) is circular in shape with an inner radius and outer radius, and the outer radius extending past an outer radius of the receptacle (400).

7. The smoker-grill cooking apparatus (1000) of claim 1, wherein the grill rack (500) is configured to rest on the at least one fixture (700), directly above the receptacle (400).

8. The smoker-grill cooking apparatus (1000) of claim 1, wherein the grill rack (500) is removable.

9. The smoker-grill cooking apparatus (1000) of claim 1, wherein the at least one fixture (700) is removable.

10. The smoker-grill cooking apparatus of claim 9 comprising:
a smoker unit, including:
the base (300); and
the lid;
a grill rack attachment (3000), including;
the grill rack (400); and
the at least one fixture (700).

11. The smoker-grill cooking apparatus of claim 10, wherein the receptacle includes an ignitor port.

12. The smoker-grill cooking apparatus of claim 11, wherein the fuel source is positioned directly below the grill rack (400) to provide a direct heat source to food on the grill rack (400).

13. The smoker-grill cooking apparatus of claim 10, wherein the receptacle includes a removable ash door.

14. The smoker-grill cooking apparatus of claim 10, wherein the fuel chamber is on a top surface (225) of the lid (200) configured to house the fuel source, wherein the fuel chamber includes at least one ignitor port.

15. The smoker-grill cooking apparatus of claim 10, wherein the smoker unit further includes:
a pair of handles (210) on the top surface (225) of the lid (200), proximal to the fuel chamber (230), configured to place the lid (200) in an open positon and a closed position.
